# EUROPÄISCHE PATENTSCHRIFT

(11) **EP 1 379 824 B1**
(45) Veröffentlichungstag und Bekanntmachung des Hinweises auf die Patenterteilung: **28.06.2006**
(21) Anmeldenummer: 02745225.9
(22) Anmeldetag: 09.04.2002
(51) Int. Cl.: F27B 1/16

(54) **VERFAHREN ZUR THERMISCHEN BEHANDLUNG VON ROHMATERIALIEN UND EINE VORRICHTUNG ZUR DURCHFÜHRUNG DES VERFAHRENS**
METHOD FOR THE THERMAL TREATMENT OF RAW MATERIALS AND A DEVICE FOR CARRYING OUT SAID METHOD
PROCEDE DE TRAITEMENT THERMIQUE DE MATIERES PREMIERES ET DISPOSITIF POUR LA MISE EN OEUVRE DUDIT PROCEDE

(30) Priorität: 10.04.2001 DE 10117962
(43) Veröffentlichungstag der Anmeldung: 14.01.2004
(73) Patentinhaber: At.Pro Tec Technologie-Team GmbH, 45886 Gelsenkirchen (DE)
(72) Erfinder: LÖFFLER, Lothar, 44805 Bochum (DE)
(74) Vertreter: Leinweber & Zimmermann
(86) Internationale Anmeldenummer: PCT/EP2002/003918
(87) Internationale Veröffentlichungsnummer: WO 2002/097347

(56) Entgegenhaltungen:
- DE-A- 4 122 381
- US-A- 4 045 212
- US-A- 4 138 098

## Beschreibung

Die vorliegende Erfindung betrifft ein Verfahren zru thermischen Behandlung von Rohmaterialien und eine Vorrichtung zur Durchführung des Verfahrens zur thermischen Behandlung von Rohmaterialien.

Aus dem Stand der Technik sind unterschiedliche Schachtöfen bekannt, die vielfältige technische Einsatzgebiete haben. So werden Schachtöfen beispielsweise als Schmelzaggregate (z. B. Hochöfen, Kupolölen, Kalzinieröfen für Bauxit) eingesetzt.

Aus der DE 41 22 381 A1 beispielsweise ist ein Verfahren zum Betreiben eines Kupolofens bekannt. Der Kupolofen wird mit dem Besatz, einer Mischung aus stückigen Rohmaterialien wie z.B. Erz, Schrott, Satzkoks und Zuschlagstoffe, von oben beschickt. Durch Einblasen von Luft ("Wind") wird der Koks zu CO₂ und CO oxidiert und so die erforderliche Schmelzenergie erzeugt. Die Luft wird dabei über Winddüsen in den Ofen geleitet, die in einer ringförmigen Ebene gleichmäßig am Ofenumfang verteilt sind. Das geschmolzene Gußeisen wird im unteren Ofenbereich, in dem sogenannten Gestell oder der Herdzone, gesammelt und fließt kontinuierlich über ein Syphonsystem aus. Bei älteren Kupolöfen wird zu der partiellen Verbrennung des Einsatzkokses Luft von Raumtemperatur (Kaltwind) eingesetzt. Neuere Anlagen werden mit vorgewärmter Luft (Heißwind) betrieben, wobei die Luftvorwärmung regenerativ mit dem Ofenabgas (Gichtgas) über sogenannte Winderhitzer erfolgt. Um den CO-Gehalt innerhalb des Ofens auf einem vorbestimmten Wert halten zu können oder zu varüeren, wird bei dem bekannten Verfahren ein Kohlengas, nämlich CO₂ oder CO, in den Ofen eingebracht. In der US-A-4,045,212 ist ein Verfahren zur thermischen Behandlung von Rohmaterial angegeben, bei dem mit Sauerstoff angereicherte Ofenabgase in den Ofen zurückgeführt werden. Über mit Luft oder, nach Schmelzbeginn, mit Sauerstoff beaufschlagte Düsen wird außerdem weiteres, sauerstoffhaltiges Gas zugeführt.

Zur Steigerung der Schmelzleistung und Verbesserung der metallurgischen Eigenschaften des Gußeisens wird bei heutigen Verfahren dem Kalt- oder Heißwind Sauerstoff zugeführt. Durch die Zuführung des Sauerstoffes werden unterschiedliche Vorteile erreicht. Dazu zählen unter anderem, dass die Temperatur in der Schmelzzone und damit auch die Schmelzleistung steigt. Darüber hinaus werden höhere Gußeisentemperaturen erzielt, und es erfolgt ein besserer Ausbrand des Satzkokses (bei unvollständigem Ausbrand sind noch freie Koksreste in der Schlacke zu finden), wobei zusätzlich der Verbrauch des letzteren sinkt. Allerdings ist bei der Zuführung von Sauerstoff festzustellen, dass sich der Druck des Sauerstoffes schon in kurzer Entfernung hinter der Zufuhrstelle abgebaut hat, so daß keine tiefere Durchdringung des Besatzes möglich ist. Es kommt vielmehr zu einem starken Temperaturgefälle zwischen dem Inneren des Besatzes und dessen an die Zufuhrstelle angrenzenden Bereichs.

Die DE 197 29 624 A1 schlägt zur Lösung dieses Problems vor, den Sauerstoff mittels einer in der Winddüse angeordneten Lanze mit erhöhtem Druck impulsweise in den Ofen einzubringen. Auf diese Weise soll ein tieferes Eindringen des Sauerstoffes in den Besatz erzielt werden, um das Temperaturgefälle innerhalb des Besatzes zu beseitigen. Zwar ermöglicht das bekannte Verfahren aufgrund des hohlen Druckes und der somit höheren Energie des eingebrachten Sauerstoffes ein tieferes Eindringen in den Besatz, allerdings sind die Ergebnisse noch nicht zufriedenstellend. Dies ist u. a. darauf zurückzuführen, daß der hohe Anstieg der lokalen Reaktionstemperatur im Bereich der O₂-Zufuhrstelle zu einer überproportionalen, exponentiellen Zunahme der Reaktionsgeschwindigkeiten führt. Nach bekannten Ansätzen (z. B. Arrhenius-Gleichung) kann im vorliegenden Fall davon ausgegangen werden, daß jede 20°C bis 30°C Temperaturerhöhung zu einer Verdopplung der Reaktionsgeschwindigkeit führt.

In der US-A-4,138,098 ist ein Verfahren zur thermischen Behandlung von Rohmaterial angegeben, bei dem Reaktionsgase durch 3 koaxial zueinander verlaufende Rohre in eine Ofenkammer eingeleitet werden. Dabei wird durch ein zentrales Rohr Heißwind, durch ein mittleres Rohr ein oxidierendes Gas, wie etwa mit Sauerstoff angereicherte Luft, und durch ein äußeres Rohr ein Kohlenwasserstoff enthaltendes Gas eingeleitet. Alle drei Rohre sind mit gesonderten Zufuhrregelungen ausgestattet, und die Zufuhr von oxidierendem Gas und Brennstoff kann unterbrochen und durch Luft, Stickstoff oder Wasserdampf ersetzt werden.

Die Aufgabe der vorliegenden Erfindung besteht somit darin, ein Verfahren zur thermischen Behandlung von Rohmaterialien anzugeben, das eine möglichst gute Durchdringung des Besatzes von Öfen gewährleistet und lokale Überhitzungen innerhalb des Besatzes vermeidet. Ferner besteht die Aufgabe darin, eine Vorrichtung zur Durchführung des erfindungsgemäßen Verfahrens zu schaffen.

Die Lösung dieser Aufgaben erfolgt anhand der Merkmale des Patentanspruches 1 bzw. 10. Vorteilhafte Ausführungsformen der Erfindung sind Gegenstand der Unteransprüche.

Bei dem erfindungsgemäßen Verfahren zur thermischen Behandlung von Rohmaterialien kommt ein Ofen, wie beispielsweise ein Schachtofen zum Einsatz. Unter Rohmaterialien sind beispielsweise Erze, Schrott, Satzkoks, Zuschlagstoffe usw. zu verstehen. Der Ofen wird mit den Rohmaterialien beschickt, wobei mindestens zwei Gasphasen in den Ofen eingeleitet werden. Die Gasphasen weisen einen unterschiedlichen Sauerstoffgehalt auf, wobei auch Gasphasen ohne Sauerstoff vorgesehen sein können. Erfindungsgemäß werden die mindestens zwei Gasphasen wechselweise in den Ofen eingeleitet. Unter wechselweisem Einleiten ist hierbei zu verstehen, daß für eine bestimmte Dauer lediglich eine der Gasphasen eingeleitet wird, ohne daß diese Gasphasen vorab gemischt werden, wobei die Gasphasen abwechselnd in einer beliebigen Reihenfolge eingeleitet werden können. Grundsätzlich ist es möglich, daß die Gasphasen unterschiedlichen Sauerstoffgehalts wechselweise diskontinuierlich eingeleitet werden, d. h. für eine bestimmte Dauer weder die eine noch die andere Gasphase zugeführt werden.

Bei herkömmlichen Verfahren wird das weitere Eindringen der Gasphase in den Besatz abgeblockt oder in ungünstigen Fällen erfolgt sogar eine Umkehr der Flußrichtung. Dies ist darauf zurückzuführen, daß die Oxidationsprodukte überwiegend gasförmig und die Reaktionen exotherm sind, so daß lokal schlagartig starke Temperaturanstiege und Druckanstiege auftreten.

Durch das wechselweise Einleiten von Gasphasen unterschiedlichen Sauerstoffgehaltes wird dieser Nachteil überwunden. Während das Einleiten einer -ersten Gasphase mit relativ hohem Sauerstoffgehalt (z. B.O₂) die obengenannten Temperatur- und Druckanstiege bewirkt, werden die Reaktionsgase durch das nachfolgende Einleiten einer zweiten Gasphase mit relativ niedrigem oder keinem Sauerstoffgehalt (z. B. Luft, CH₄) wieder in Richtung Ofenmitte bewegt, wodurch ein Temperatur- und Konzentrationsausgleich erfolgt. Hier ist es wiederum besonders vorteilhaft, daß sich die ausgleichenden Reaktionen in tieferen Zonen des Besatzes bei immer intensiveren Durchmischungen der aufeinander folgenden Gase erfolgt, wobei jetzt aber Gas-/Gas-Reaktionen mit an sich wesentlich höheren Reaktionsgeschwindigkeiten stattfinden. Die Folge von Gasphasen mit hohem Sauerstoffgehalt und Gasphasen mit niedrigem Sauerstoffgehalt ergibt den Vorteil, daß mit der Gasphase mit dem hohen Sauerstoffgehalt eine "Initialzündung" mit exponentiell gesteigerten Reaktionsgeschwindigkeiten und Stoffumsätzen (insbesondere auch bei der Gas-/Feststoff Reaktion mit dem Satzkoks) und anschließend durch die Gasphase mit dem geringeren Sauerstoffgehalt ein Ausgleich der Atmosphären und Temperaturen bei weiterhin hohen Strömungsgeschwindigkeiten und damit gutem Abtransport der gasförmigen Reaktionsprodukte erfolgt. Das erfindungsgemäße Verfahren ermöglicht somit eine gute Durchdringung des Besatzes von Öfen und vermeidet lokale Überhitzungen innerhalb des Besatzes.

Bei dem erfindungsgemäßen Verfahren wird also eine Gasphase mit hohem Sauerstoffgehalt, beispielsweise reiner Sauerstoff, kurzzeitig, vorzugsweise mit hohem Druck eingedüst und eine spontane Oxidation eingeleitet. Dann wird eine Gasphase mit niedrigerem Sauerstoffgehalt, beispielsweise Preßluft, eingedüst, wobei die Eindüsung von Sauerstoff und Preßluft einander überschneiden, unmittelbar aufeinanderfolgend oder zeitverzögert erfolgen kann.

Das Verfahren hat den Vorteil, daß gegenüber mit Sauerstoff angereicherter Luft als Ausgangsprodukt die Oxidation des Kokses nicht durch den Ballast "Stickstoff" behindert wird. Durch das Induzieren von Preßluft wird die lokale Atmosphäre verdünnt und partiell gekühlt, so daß sich die Reaktionsgleichgewichte neu einstellen. Der Ausgleich der Konzentrationen und Temperaturen durch Turbulenzen und Diffusion infolge der chargenweisen Einbringung von Sauerstoff und Luft bringen deutliche Vorteile hinsichtlich der Reaktionsführung. Prinzipiell dient der Besatz als internes Mischorgan für die Herstellung angereicherter Luft. Die Mischung kann durch Variation der verschiedenen Taktlängen schnell dem Prozeß angepaßt werden, so daß Schwankungen in der Schmelze minimiert werden können.

In einer bevorzugten Ausführungsform des erfindungsgemäßen Verfahrens werden die mindestens zwei wechselweise in den Ofen eingeleiteten Gasphasen unter einem Druck in den Ofen eingeleitet, der größer als der Innendruck des Ofens ist. Durch den Druck wird einerseits ein tieferes Eindringen in den Ofenbesatz erreicht und andererseits der Einfluß der Randgängigkeit in dieser Zone minimiert. Damit lassen sich der verbrennungstechnische Wirkungsgrad sowie die metallurgischen Ergebnisse erheblich verbessern.

In einer weiteren bevorzugten Ausführungsform des Verfahrens werden die mindestens zwei Gasphasen in einem kontinuierlichen Volumenstrom in den Ofen eingeleitet. Zwischen dem Einleiten der unterschiedlichen Gasphasen gibt es demzufolge keinerlei Unterbrechung, so daß die unmittelbar aufeinander folgenden Gasphasen sich gegenseitig treiben und somit konstante Strömungsherhältnisse aufbauen. Hieraus ergibt sich eine gute Durchdringung des Besatzes.

Vorteilhafterweise ist eine der mindestens zwei Gasphasen bei einer bevorzugten Ausführungsform des Verfahrens eine Mischung aus einem inerten Gas und Sauerstoff. Vorzugsweise ist das inerte Gas N₂ und/oder CO₂ und/oder Ar.

In einer vorteilhaften Ausführungsform des erfindungsgemäßen Verfahrens ist eine der mindestens zwei Gasphasen Luft.

In einer weiteren vorteilhaften Ausführungsform des erfindungsgemäßen Verfahrens ist eine der mindestens zwei Gasphasen Sauerstoff.

Um auf veränderte Betriebsparameter reagieren zu können, werden zur Einstellung einer bestimmten Atmosphäre in dem Ofen die Anteile der mit den mindestens zwei Gasphasen in den Ofen eingeleiteten Sauerstoffmengen in einer bevorzugten Ausführungsform geregelt. Hierdurch kann kurzfristig und sehr feinfühlig auf veränderte Betriebsparameter reagiert werden.

In einer bevorzugten Ausfiihrungsforxn der Erfindung wird zur Einstellung der mit den mindestens zwei Gasphasen in den Ofen eingebrachten Sauerstoffinengen die Dauer verändert, für die die einzelnen Gasphasen in den Ofen eingeleitet werden.

Um stets die ideale Atmosphäre innerhalb des Ofens zu gewährleisten, können die Anteile der mit den mindestens zwei Gasphasen in den Ofen eingebrachten Sauerstoffmengen geregelt werden.

Der erfindungsgemäße Ofen zur thermischen Behandlung von Rohmaterialien weist eine Kammer mit einer Beschickungsöffnung für die Rohmaterialien auf. Ferner ist eine Einleitungseinrichtung zum Einleiten von mindestens zwei Gasphasen mit unterschiedlichem Sauerstoffgehalt in die Kammer vorgesehen. Die Einleitungseinrichtung ist derart ausgebildet, daß die mindestens zwei Gasphasen wechselweise in den Ofen eingeleitet werden.

In einer vorteilhaften Ausführungsform des erfindungsgemäßen Ofens weist die Einleitungseinrichtung zum Zuführen der Gasphasen Gasphasenleitungen mit Steuerventilen auf. Unter einer Gasphasenleitung ist jegliche Art von Zuführung zu verstehen, in der die Gasphasen geleitet werden können.

Die Einleitung der Gasphasen erfolgt in Sequenzen, die in der Länge, dem zeitlichen Abstand voneinander sowie der Zuordnung der beiden Gasphasen zueinander beliebig variiert werden können. Die Regelung kann über eine speicherprogrammierbare Steuerung (SPS), beispielsweise mit einem Mikroprozessor, erfolgen. Dabei können die obengenannten Parameter variabel frei programmiert und damit der Zufluß der Gasphasen über die Ventile gesteuert werden.

In einer bevorzugten Ausführungsform des Ofens gemäß der Erfindung sind Druckregeler zum Einstellen des Gasdrucks in den Gasphasenleitungen vorgesehen.

Um eine Überwachung des Ofens während des Betriebes zu ermöglichen und ggf. eine Änderung der Atmosphäre vornehmen zu können, kann eine Analyseeinrichtung zum Analysieren der Atmosphäre in dem Ofen und/oder eine Meßeinrichtung zum Messen der Temperatur in dem Austragsgut des Ofens vorgesehen sein.

In einer besonders bevorzugten Ausführungsform des erfindungsgemäßen Ofens sind ein oder mehrere um den Ofen angeordnete Ringleitungen vorgesehen. An diese Ringleitungen sind die Versorgungslanzen angeschlossen.

Im folgenden wird die Erfindung anhand von Ausführungsbeispielen unter Bezugnahme auf die beigefügten Figuren eingehender erläutert.

Es zeigen:
- Fig. 1: eine Seitenansicht eines nach dem erfindungsgemäßen Verfahren betreibbaven Ofens in einer ersten Ausführungsform in geschnittener Darstellung und
- Fig. 2: eine Seitenansicht eines solchen Ofens in einer zweiten bzw. dritten Ausführungsform in geschnittener Darstellung.

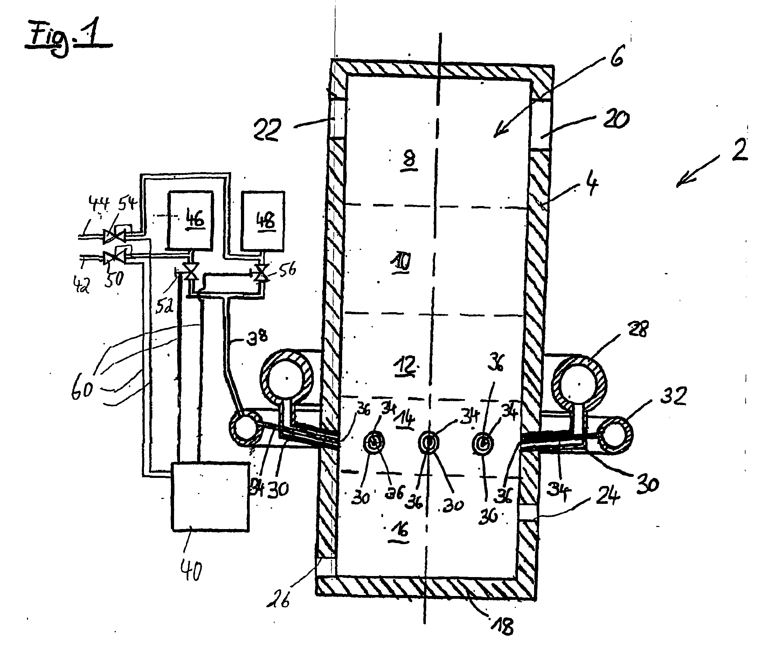

Fig. 1 zeigt einen Ofen 2, der in der vorliegenden Ausführungsform als Kupolofen ausgebildet ist. Der Kupolofen dient zum kontinuierlichen Erschmelzen von Gußeisen. Der Ofen 2 weist ein Ofengehäuse 4 auf, das eine Kammer 6 einschließt. Die Kammer 6 weist von oben nach unten mehrere Zonen auf, in denen unterschiedliche Prozesse ablaufen, nämlich eine Beschickungszone 8, eine Vorwärmzone 10, eine Schmelzzone 12, eine sogenannte Windzone 14 und eine Herdzone 16, wobei letztere unmittelbar oberhalb des Ofenbodens 18 angeordnet ist. Das Ofengehäuse 4 weist im Bereich der Beschickungszone 8 eine seitliche Beschickungsöffnung 20 auf, wobei die Beschickungsöffnung auch oberhalb der Beschickungszone 8 angeordnet sein kann. Die Beschickungsöffnung ist derart ausgebildet, daß über diese die zu behandelnden Rohmaterialien (nicht dargstellt), wie z.B. eine Mischung aus Roheisen, Schrott, Koks, Kalk, Legierungsbestandteilen und weiteren Zuschlagstoffen, der Kammer 6 zugeführt werden können. Im Bereich der Beschickungszone weist das Ofengehäuse ferner eine Abzugsöffnung 22 auf, durch die entstehende Gichtgase abgeführt werden können.

Der Schachtofen 2 verfügt über einen Schlackenabstich 24 und einen Eisenabstich 26. Weiterhin weist der Ofen 2 eine erste Ringleitung 28 auf, die das Ofengehäuse 4 ringförmig umschließt und über eine nicht dargestellte Luftzuführeinrichtung mit Luft versorgt wird. Es sind ferner mehrere gleichmäßig um den Ofen 2 verteilte, rohrförmige Winddüsen 30 vorgesehen, die einerseits an die erste Ringleitung 28 angeschlossen sind und andererseits in die Kammer 6 im Bereich der Windzone 14 münden. Bei der dargestellten ersten Ausführungsform des Ofens 2 ist außerdem eine zweite Ringleitung 32 vorgesehen, die das Ofengehäuse 4 ringförmig umschließt. An die zweite Ringleitung 32 sind im wesentlichen rohrförmige Gasphaseneinleitungslanzen 34 angeschlossen, deren Enden 36 in die Kammer 6 im Bereich der Windzone 14 münden. Bei der ersten Ausführungsform sind die Gasphaseneinleitungslanzen 34 weitgehend koaxial in den Winddüsen 30 angeordnet, so daß das Ende 36 der Gasphaseneinleitungslanzen 34 in der Mitte des Mündungsbereiches der Winddüsen 30 im Bereich der Kammer 6 angeordnet ist.

Eine erste Leitung 42 zum Zuführen einer ersten Gasphase und eine zweite Leitung 44 zum Zuführen einer zweiten Gasphase münden in eine gemeinsame Gasphasenleitung 38, an der die zweite Ringleitung 32 angeschlossen ist. An der ersten Gasphasenleitung 24 ist ein erster Windkessel 46 und an der zweiten Gasphasenleitung 42 ein zweiter Windkessel 48 angeschlossen. In den Windkesseln sind unter Druck stehende Gasphasen mit unterschiedlichem Sauerstoffgehalt enthalten, wobei der Druck innerhalb der Windkessel 46, 48 oberhalb des Drucks innerhalb der Kammer 6 des Ofens 2 im Bereich der Windzone 14 liegt. Im vorliegenden Beispiel wird davon ausgegangen, daß über die Gasphasenleitungen 42, 44 dem ersten Windkessel 46 reiner Sauerstoff (O₂) und dem zweiten Windkessel 48 Luft zugeführt wird. Die Windkessel 46, 48 sind nicht zwingend erforderlich, vielmehr dienen sie nur als Schwingungsdämpfer.

In die erste Gasphasenleitung 42 ist stromauf des ersten Windkessels 46 ein erster Druckregler 50 und stromab des Windkessels 46 ein erstes Steuerventil 52 geschaltet, während in die zweite Gasphasenleitung 44 stromauf des zweiten Windkessels 48 ein zweiter Druckregler 54 und stromab des Windkessels ein zweites Steuerventil 56 geschaltet ist.

Der Ofen weist weiterhin eine Steuereinheit 40 auf, die zur Regelung des Zuflusses der Gasphasen über Steuerleitungen 60 mit dem ersten und zweiten Druckregler 50, 54 und dem ersten und zweiten Steuerventil 52, 56 verbunden ist.

Die Steuereinheit 40 steuert die Steuerventile so an, daß die gemeinsame Gasphasenleitung 38 und die erste Gasphasenleitung 42 strömend miteinander verbunden sind, wohingegen die zweite Gasphasenleitung 44 verschlossen ist, oder die gemeinsame Gasphasenleitung 38 und die zweite Gasphasenleitung 44 strömend miteinander verbunden sind, wohingegen die erste Gasphasenleitung 42 verschlossen ist. Über die Druckregler 50, 54 stellt die Steuereinheit den Druck in den Windkesseln ein.

Im folgenden wird die Funktionsweise der in Fig. 1 dargestellten ersten Ausführungsform des Ofens beschrieben.

Über die Beschickungsöffnung 20 wird die Kammer 6 des Ofens 2 mit den thermisch zu behandelnden Rohmaterialien (nicht dargestellt) beschickt, wobei die in der Kammer 6 befindlichen Rohmaterialien den sogenannten Besatz darstellen. Im vorliegenden Beispiel soll es sich bei den Rohmaterialien um eine Mischung aus Roheisen, Schrott, Koks, Kalk, Legierungsbestandteilen und weiteren Zuschlagstoffen handeln. Die kontinuierlich zugeführten Rohmaterialien durchwandern im Laufe des Prozesses sukzessive die unterschiedlichen Zonen der Kammer 6 von oben nach unten. In der Beschickungszone 8 werden die Rohmaterialien angehäuft. In der Vorwärmzone 10 werden die Rohmaterialien durch die aus den darunterliegenden Zonen aufsteigende Wärme und Reaktionsgase vorgewärmt. Danach gelangen die vorgewärmten Rohmaterialien in die Schmelzzone 12, in der das Schmelzen der Rohmaterialien aufgrund der hohen Temperaturen beginnt. Im Anschluß daran gelangen die teilweise geschmolzenen Rohmaterialien in die Windzone 14. In der Windzone 14 wird Luft über die erste Ringleitung 28 und die Winddüsen 30 in die Kammer 6 eingeleitet. Die zur Verbrennung erforderliche Luft wird als sogenannter Kaltwind unvorgewärmt oder als Heißwind in die Windzone 14 eingeleitet. Durch die Zuleitung der Luft werden die Rohmaterialien in der Windzone 14 komplett geschmolzen und die Schmelze gelangt in die Herdzone 16, in der einerseits die auf der Schmelze schwimmende Schlacke über die erste Öffnung 24 und andererseits die Schmelze über die zweite Öffnung 26 abgeführt wird.

Um eine gute Durchdringung des Besatzes zu ermöglichen und lokale - Überhitzungen innerhalb des Besatzes zu vermeiden, werden bei dem erfindungsgemäßen Ofen 2 mindestens zwei Gasphasen unterschiedlichen Sauerstoffgehaltes wechselweise in die Windzone 14 der Kammer 6 eingeleitet. Die Einleitung erfolgt dabei über die erste bzw. zweite Gasphasenleitung 42, 44, die gemeinsame Gasphasenleitung 38 und die Gasphaseneinleitungslanzen 34. Der stetige Wechsel zwischen den einzuleitenden Gasphasen wird durch eine Steuereinheit 40 über die Steuerventile 52, 56 so gesteuert, daß die unter Druck stehende sauerstoffreiche Gasphase (O₂) und die unter Druck stehende sauerstoffarme Gasphase (Luft) in Sequenzen in die Windzone 14 gelangen.

Die Dauer, in der die Steuerventile geöffnet bzw. geschlossen sind, können durch die Steuereinheit 40 verändert werden. Darüber hinaus kann der Druck der jeweiligen Gasphase über die Druckregler 50 bzw. 54 verändert werden. Zur Einstellung einer bestimmten Atmosphäre in dem Ofen werden die Anteile der mit den beiden Gasphasen in den Ofen eingebrachten Sauerstoffmengen geregelt, wobei zur Einstellung der Sauerstoffmengen die Dauer, für die die Gasphasen eingeleitet werden, verändert werden.

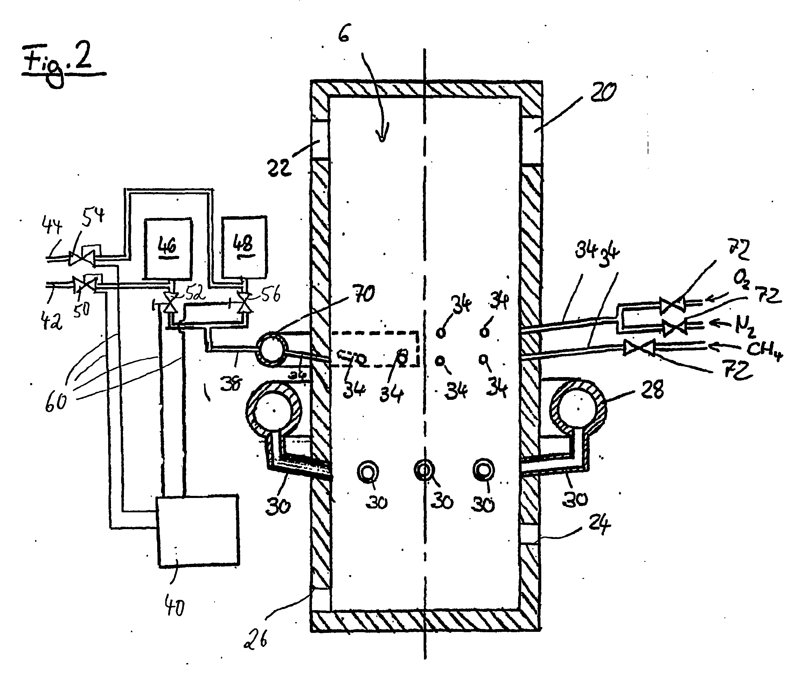

Bei der oben beschriebenen ersten Ausführungsform des Ofens sind die Gasphaseneinleitungslanzen 3 zweckmäßigerweise innerhalb der Winddüsen 30 (vorzugsweise konzentrisch) angeordnet, wie dies in Fig. 1 dargestellt ist. Es ist aber auch möglich, daß die Gasphaseneinleitungslanzen 34 oberhalb der Winddüsen 30 angeordnet sind, so daß die Gasphasen oberhalb des Windes eingeleitet werden, wie dies in Fig. 2 dargestellt ist. Es sind aber auch andere Anordnungen der Gasphaseneinleitungslanzen 34 möglich, so kann beispielsweise der Neigungswinkel der Gasphaseneinleitungslanzen 34 zur Ofenachse oder deren Eintauchtiefe in die Kammer 6 des Ofens 2 variiert werden. Ferner kann es sinnvoll sein, einzelne Gasphaseneinleitungslanzenlanzen 34 bzw. Gruppen von Gasphaseneinleitungslanzen 34 auf jeweils unterschiedlichen Höhenpositionen anzuordnen.

Fig. 2/links zeigt eine zweite und Fig. 2/rechts eine dritte Ausführungsform des Ofens 2, wobei die dritte Ausführungsform als einzige Anspruch 10 entspricht. Die zweite Ausführunsgfbrm(Fig. 2/links) unterscheidet sich weiterhin dadurch von der ersten Ausführungsform, daß keine zweite Ringleitung 32 vorgesehen ist. Der erfindungsgemäße Ofen 2 weist vielmehr mehrere Ringsegmentleitungen 70 auf, von denen lediglich eine dargestellt ist und die ringförmig um den Ofen 2 angeordnet sind. Vorzugsweise sind insgesamt vier umfangsmäßg verteilt angeordnete Ringsegmentleitungen vorgesehen. Die Ringsegmentleitungen sind wiederum mit einer ersten Gasphasenleitung 38 verbunden und weisen Gasphaseneinleitungslanzen 34 auf, die in die Kammer 6 des Ofens 2 münden. Die Ringsegmentleitungen 70 können unabhängig voneinander mit den Gasphasen beaufschlagt werden. Vorzugsweise werden die Leitungen 70 nacheinander mit den Gasphasen beaufschlagt, so daß die Gasphasen im oder entgegen dem Uhrzeigersinn von jeweils einer Seite in den Ofen eingeleitet werden. Bezüglich der anderen Teile des Ofens wird auf die Beschreibung unter Bezugnahme auf Fig. 1 verwiesen.

Die dritte Ausfiihrungsform (Fig. 2/rechts) unterscheidet sich dahingehend von der ersten Ausfiihrungsform, daß separate Gasphaseneinleitungslanzen 34 mit jeweils einem oder zwei Ventilen 72 vorgesehen sind, wobei jede Gasphaseneinleitungslanze 34 eine eigene Gasphasenversorgung aufweist. In diesem Fall kann z.B. eine speicherprogrammierbare Steuerung (SPS) eingesetzt werden, wobei Ventilstörungen oder Steuerfehler beispielsweise über rückgeführte Druck- oder Durchfluß-Sensoren erkannt und ausgeschlossen werden können.

## Patentansprüche

1. Verfahren zur thermischen Behandlung von Rohmaterialien, bei dem ein Ofen mit den Rohmaterialien beschickt und Luft in eine Wind-zone des Ofens eingeleited wird sowie zusatzlich mindestens zwei Gasphasen in den Ofen eingeleitet werden, in dem die Rohmaterialien der thermischen Behandlung unterzogen werden, wobei die mindestens zwei Gasphasen einen unterschiedlichen Sauerstoffgehalt haben und in stetigem Wechsel derart abwechselnd in den Ofen eingeleitet werden, daß für eine bestimmte Dauer lediglich eine der Gasphasen eingeleitet wird, wobei durch die Einleitung der Gasphase mit hohem Sauerstoffgehalt gesteigerte Reaktionsgeschwindigkeiten und Stoffumsätze und durch die daran jeweils anschließende Einleitung der Gasphase mit dem geringeren Sauerstoffgehalt ein Ausgleich der Atmosphäre und Temperaturen bewirkt wird und wobei die Gasphasen unterschiedlichen Sauerstoffgehalts wechselweise derart diskontinuierlich eingeleitet werden, daß für eine bestimmte Dauer weder die eine noch die andere Gasphase zugeführt wird.

2. Verfahren nach Anspruch 1, **dadurch gekennzeichnet, daß** die mindestens zwei in den Ofen wechselweise eingeleiteten Gasphasen unter einem Druck in den Ofen eingeleitet werden, der größer als der Innendruck des Ofens ist.

3. Verfahren nach Anspruch 1 oder 2, **dadurch gekennzeichnet, daß** die mindestens zwei Gasphasen in einem kontinuierlichen Volumenstrom in den Ofen eingeleitet werden.

4. Verfahren nach einem der Ansprüche 1 bis 3, **dadurch gekennzeichnet, daß** eine der mindestens zwei Gasphasen eine Mischung aus einem inerten Gas und Sauerstoff ist.

5. Verfahren nach Anspruch 4, **dadurch gekennzeichnet, daß** das inerte Gas N₂ und/oder CO₂ und/oder Ar ist.

6. Verfahren nach einem der Ansprüche 1 bis 3, **dadurch gekennzeichnet, daß** eine der mindestens zwei Gasphasen Luft ist.

7. Verfahren nach einem der Ansprüche 1 bis 3, **dadurch gekennzeichnet, daß** eine der mindestens zwei Gasphasen Sauerstoff ist.

8. Verfahren nach einem der Ansprüche 1 bis 7, **dadurch gekennzeichnet**, zur Einstellung einer bestimmten Atmosphäre in dem Ofen die Anteile der mit den mindestens zwei Gasphasen in den Ofen eingebrachten Sauerstoffmengen in dem Ofen geregelt werden.

9. Verfahren nach Anspruch 8, **dadurch gekennzeichnet, daß** zur Einstellung der mit den mindestens zwei Gasphasen in den Ofen eingebrachten Sauerstoffmengen die Dauer, für die die einzelnen Gasphasen in den Ofen eingeleitet werden, verändert wird.

10. Ofen zur thermischen Behandlung von Rohmaterialien mit einem Verfahren nach einem der vorliegenden Ansprüche mit einer Kammer (6), die eine Beschickungsöffnung (20) für die Rohmaterialien aufweist, und einer Einleitungseinrichtung zum Einleiten von mindestens zwei Gasphasen unterschiedlichen Sauerstoffgehaltes in die Kammer (6), bei dem die Einieitungseinrichtung derart ausgebildet ist, daß die mindestens zwei Gasphasen in stetigem Wechsel in den Ofen (2) eingeleitet werden, **dadurch gekennzeichnet, daß** mehrere um den Ofen (2) angeordnete Ringsegmentleitungen (70) mit jeweils mehreren über den Ümfang verteilt in die Kammer (6) mündenden Gasphaseneinleitungslanzen (34) vorgesehen sind, wobei die Ringsegmentleitungen (70) unabhängig voneinander mit den Gasphasen beaufschlagbar sind.

11. Ofen nach Anspruch 10, **dadurch gekennzeichnet, daß** die Einleitungseinrichtung zwei Gasphasenleitungen (42,44) zum Zuführen von zwei Gasphasen unterschiedlichen Sauerstoffgehalts in die Kammer (6) aufweist, in denen jeweils ein Steuerventil (52,54) angeordnet ist.

12. Ofen nach Anspruch 11, **dadurch gekennzeichnet, daß** in den Gasphasenleitungen (42,44) Druckregler (50, 54) zum Emstellen des Gasphasendrucks vorgesehen sind.

## Claims

1. Method for the thermal treatment of raw materials, in which a furnace is charged with the raw materials and air is injected in a blast zone of the furnace and additionally at least two gas phases are injected into the furnace, in which the raw materials are subjected to thermal treatment, in which at least two gas phases have different oxygen contents and are injected alternately into the furnace in continuous alternation in such a way that for a specific duration only one of the gas phases is injected, in which increased reaction speeds and flow rates are effected by introducing the gas phase with a high oxygen content and a balancing of the atmosphere and temperature is effected by the injection of the gas phase with the lower oxygen content following on in each case and in which the gas phases with different oxygen contents are alternately injected in a discontinuous manner in such a way that for a specific duration neither one or the other gas phase is supplied.

2. Method according to Claim 1, **characterised in that** at least two gas phases injected alternately into the furnace are introduced into the furnace at a pressure that is greater than the internal pressure of the furnace.

3. Method according to Claim 1 or 2, **characterised in that** at least two gas phases are introduced in a continuous volumetric flow into the furnace.

4. Method according to one of Claims 1 to 3, **characterised in that** one of at least two gas phases is a mixture of an inert gas and oxygen.

5. Method according to Claim 4, **characterised in that** the inert gas is N₂ and/or CO₂ and/or Ar.

6. Method according to one of Claims 1 to 3, **characterised in that** one of at least two gas phases is air.

7. Method according to one of Claims 1 to 3, **characterised in that** one of at least two gas phases is oxygen.

8. Method according to Claims 1 to 7, **characterised in that** the proportions of the oxygen quantities introduced into the furnace with at least two gas phases are regulated in the furnace in order to set a certain atmosphere in the furnace.

9. Method according to Claim 8, **characterised in that** the duration for which the individual gas phases are introduced into the furnace is varied in order to adjust the quantities of oxygen introduced into the furnace with at least two gas phases.

10. Furnace for the thermal treatment of raw materials with a method according to one of the foregoing claims with a chamber (6) that has a charging opening (20) for the raw materials and an injection apparatus for supplying at least two gas phases with different oxygen contents into the chamber (6), in which the injection apparatus is designed in such a way that at least two gas phases are introduced into the furnace (2) in continuous alternation, **characterised in that** a plurality of segmented bustle pipes (70) arranged around the furnace (2) distributed around the circumference are each provided with a plurality of gas phase injection lances (34) opening into the chamber (6), in which the gas phases can be admitted to each segmented bustle pipe (70) independently.

11. Furnace according to Claim 10, **characterised in that** the injection apparatus has two gas phase conduits (42, 44), in each of which a control valve (52, 54) is arranged, for supplying the two gas phases with different oxygen contents into the chamber (6).

12. Furnace according to Claim 11 **characterised in that** pressure regulators (50, 54) for adjusting the pressure of the gas phases are provided in the gas phase conduits (42, 44).

## Revendications

1. Procédé de traitement thermique de matières premières utilisant un four garni de ces matières et dans lequel est introduit de l'air dans une zone d'aération du four, ainsi qu'au moins deux phases gazeuses, four dans lequel les matières premières sont soumises au traitement thermique, les phases gazeuses au nombre de deux au moins présentant des teneurs en oxygène différentes et étant introduites en alternance permanente dans le four, pendant une durée définie pour chaque phase, l'introduction de la phase à haute teneur en oxygène augmentant les vitesses de réaction et les transformations de matières, tandis que l'introduction qui suit de la phase à plus faible teneur en oxygène produit un équilibrage de l'atmosphère et des températures, les phases gazeuses à teneurs différentes en oxygène étant introduites alternativement de manière discontinue, de sorte que pendant une durée définie, ni l'une ni l'autre des phases n'est introduite.

2. Procédé selon la revendication 1, **caractérisé en ce que** les phases gazeuses au nombre de deux au moins introduites alternativement dans le four le sont sous une pression qui est supérieure à la pression interne du four.

3. Procédé selon la revendication 1 ou 2, **caractérisé en ce que** les phases gazeuses au nombre de deux au moins sont introduites dans le four avec un courant volumique continu.

4. Procédé selon une des revendications 1 à 3, **caractérisé en ce qu'**une des phases au nombre de deux au moins est un mélange d'un gaz inerte et d'oxygène.

5. Procédé selon la revendication 4, **caractérisé en ce que** le gaz inerte et de l'azote et/ou du gaz carbonique et/ou de l'argon.

6. Procédé selon une des revendications 1 à 3, **caractérisé en ce qu'**une des phases au nombre de deux au moins est de l'air.

7. Procédé selon une des revendications 1 à 3, **caractérisé en ce qu'**une des phases au nombre de deux au moins est de l'oxygène.

8. Procédé selon une des revendications 1 à 7, **caractérisé en ce que** pour obtenir une atmosphère définie dans le four, les parts des quantités d'oxygène introduites dans le four au moyen des phases gazeuses au nombre de deux au moins, sont régulées.

9. Procédé selon la revendication 8, **caractérisé en ce que** pour régler les quantités d'oxygène introduites dans le four au moyen des phases gazeuses au nombre de deux au moins, la durée d'introduction de chaque phase individuelle dans le four est modifiée.

10. Four pour le traitement thermique de matières premières en mettant en oeuvre le procédé selon une des revendications précédentes, ce four comportant une chambre (6) avec une ouverture d'introduction des matières premières et ainsi que pour introduire au moins deux phases gazeuses à teneurs en oxygène différentes dans la chambre, un dispositif d'introduction qui est constitué de manière que les phases gazeuses au nombre de deux au moins sont introduites en alternance permanente dans le four (2), **caractérisé en ce que** plusieurs conduites segmentaires annulaires (70) entourent le four et comportent chacune plusieurs lances d'introduction de phases réparties à la périphérie et débouchant dans la chambre (6), les conduites segmentaires annulaires (70) pouvant être alimentées en phases gazeuses indépendamment les unes des autres.

11. Four selon la revendication 10, **caractérisé en ce que** le dispositif d'introduction comporte deux conduites de phases gazeuses (42, 44) pour introduire dans la chambre (6), deux phases gazeuses à teneurs en oxygène différentes, et dans chacune des conduites est montée une soupape de commande (52, 54).

12. Four selon la revendication 11, **caractérisé en ce que** des régulateurs de pression (50, 54) sont prévus dans les conduites de phases gazeuses (42, 44) pour régler la pression de phase gazeuse.
